# EUROPÄISCHE PATENTSCHRIFT

(11) **EP 3 047 264 B1**
(45) Veröffentlichungstag und Bekanntmachung des Hinweises auf die Patenterteilung: **05.01.2022**
(21) Anmeldenummer: 14781058.4
(22) Anmeldetag: 16.09.2014
(51) Int. Cl.: G01N 27/72, G01N 27/90

(54) **VERFAHREN ZUR BERÜHRUNGSLOSEN BESTIMMUNG EINER MECHANISCH-TECHNOLOGISCHEN KENNGRÖSSE VON FERROMAGNETISCHEN METALLEN**
METHOD FOR DETERMING A MECHANICAL-TECHNOLOGICAL CHARACTERISTIC OF A FERROMAGNETIC METAL
PROCÉDÉ DE DÉTERMINATION D'UNE CARACTÉRISTIQUE MÉCANO-TECHNOLOGIQUE D'UN METAL FERROMAGNÉTIQUE

(30) Priorität: 20.09.2013 DE 102013015566
(43) Veröffentlichungstag der Anmeldung: 27.07.2016
(73) Patentinhaber: Rosen Swiss AG, 6370 Stans (CH)
(72) Erfinder: MOLENDA, Daniel, 49808 Lingen (DE); THALE, Werner, 49134 Wallenhorst (DE); REINING, Bernhard, 48488 Emsbüren (DE); RAPP, Michael, 49808 Lingen (DE)
(74) Vertreter: Weeg, Thomas
(86) Internationale Anmeldenummer: PCT/EP2014/002490
(87) Internationale Veröffentlichungsnummer: WO 2015/039742

(56) Entgegenhaltungen:
- EP-A1- 0 394 158
- DE-A1-102009 009 027
- US-A- 4 855 676
- US-A1- 2003 020 469
- JAVIER GARCÍA-MARTÍN ET AL: "Non-destructive techniques based on eddy current testing", SENSORS, MOLECULAR DIVERSITY PRESERVATION INTERNATIONAL (MDPI), CH, Bd. 11, Nr. 3, 28. Februar 2011 (2011-02-28), Seiten 2525-2565, XP002718104, ISSN: 1424-8220, DOI: 10.3390/S110302525
- NICOLA BOWLER ET AL: "Electrical conductivity measurement of metal plates using broadband eddy-current and four-point methods; Broadband conductivity measurement of metal plates", MEASUREMENT SCIENCE AND TECHNOLOGY, IOP, BRISTOL, GB, Bd. 16, Nr. 11, 1. November 2005 (2005-11-01), Seiten 2193-2200, XP020090446, ISSN: 0957-0233, DOI: 10.1088/0957-0233/16/11/009
- Mathias Stolzenberg ET AL: "Special: Mess-und Prüftechnik", , 1. Januar 2012 (2012-01-01), XP055158303, Gefunden im Internet: URL:http://www.emg-automation.com/fileadmi n/files/2012_07_SP_Materialcharakterisieru ng-an-Flachprodukten.pdf [gefunden am 2014-12-12] in der Anmeldung erwähnt

## Beschreibung

Die Erfindung betrifft ein Verfahren zur Bestimmung mechanisch-technologischer Kenngrößen von ferromagnetischen Stählen und insbesondere von feingranularen Stählen, die in Pipelines verwendet werden, wobei eine zumindest einen Permanent- oder Elektromagneten ausweisende Magnetisiervorrichtung das zu bestimmende Material in Form von ferromagnetischem Stahl magnetisiert und eine Sensorvorrichtung umfassend eine Sendespule ein insbesondere variierendes Magnetfeld erzeugt, welches mit dem von der Magnetisiervorrchtung im Metall erzeugten Magnetfeld wechselwirkt und zur Ausbildung von Wirbelströmen führt. Der Wirbelstrom wird somit durch die Sendespule in dem von der Magnetisierungsvorrichtung magnetisierten Metall erzeugt. Des Weiteren wird ein Inspektionsmolch für Pipeline-Rohre mit wenigstens einer als Magnetjoch ausgebildeten Magnetisiervorrichtung und einer eine Sendespule aufweisenden Sensorvorrichtung umfassend einen Wirbelstromsensor offenbart.

Aus dem Stand der Technik (Artikel "Material characterization on flat steel enhances process control", Stahl und Eisen, 2012, Ausgabe Nr. 7, Seiten 80-90), ist es bekannt, elektromagnetische Verfahren zur Erkennung mechanisch-technologischer Kenngrößen zu finden, die auf Eigenschaften der Hysteresekurve des zu untersuchenden Materials abstellen. Bei der Materialuntersuchung werden beispielsweise

Stahlplatten kontrolliert an einer Sensorvorrichtung vorbeigeführt. Für den Einsatz innerhalb einer Pipeline, insbesondere einer Jahrzehnte alten Ölpipeline, in der sich die Sensorvorrichtung auf einem passiv oder aktiv bewegten Inspektionsmolch befindet und in der bei einer Inspektion aufgrund einer Vielzahl von Störquellen wie remanenter Magnetisierung, Fehlstellen oder dergleichen Störeinflüsse auftreten können, ist die Verwendung einer solchen Methode nicht geeignet oder zumindest messtechnisch schwierig realisierbar und beherrschbar.

Aus der US 2003/0020469 A1 ist ein Verfahren und eine Vorrichtung zur Untersuchung von Rissen und Bruchstellen in Eisenbahnschienen bekannt, bei der mit Hilfe einer elektromagnetischen Toroid-Spule ein Bereich der Eisenbahnschiene vormagnetisiert wird, um dann durch Induktion von Wirbelströmen sowie Aufnahme der gegeninduzierten Magnetfelder in einer Spule Risse oder Brüche als Anomalitäten indiziert zu erhalten. Zur Untersuchung werden dabei niederfrequente Wirbelströme, beispielsweise mit einer Frequenz von 80 Hz, vorgesehen. Eine solche Arbeitsweise ist allerdings für andere Anwendungsfälle wie etwa die Untersuchungen von Pipelines nachteilig, weil die tiefe, niederfrequente Untersuchung Wanddickeneinflüsse einbezieht und bei langen Untersuchungsstrecken mit hoher Fahrtgeschwindigkeit, wie sie etwa bei Molchen in Pipelines gegeben ist, nur ein grobes Untersuchungsraster erlaubt.

Die DE 10 2009 009 027 A1 offenbart die Bestimmung einer Materialeigenschaft eines elektrisch leitfähigen Bauteils, bei welchem an dem Bauteil ein Wert einer elektrischen Messgröße erfasst wird, der Wert der elektrischen Messgröße mit wenigstens einem Vergleichswert verglichen wird und auf Basis eines zuvor ermittelten Zusammenhangs zwischen dem wenigstens einen Vergleichswert und der wenigstens einen Materialeigenschaft auf die wenigstens eine Materialeigenschaft rückgeschlossen wird. Dieses Verfahren wird insbesondere zur automatisierten Güteprüfung von Bauteilen in der Fahrzeugfertigung verwendet.

Aus einer Veröffentlichung von Javier Garcia Martin et al. "Non-destructive techniques based on eddy current testing" aus Sensors, Molecular Diversity Preservation International (MDPI), CH, Bd. 11, Nr. 3, 28. Februar 2011 (2011/02/28), Seiten 2525 - 2565, XP002718104 ergeben sich allgemeine Hinweise über die Anwendung von zerstörungsfreien Techniken auf der Basis von Wirbelstromuntersuchungen, unter denen auch variierende Eigenschaften ferromagnetischer und nicht-ferromagnetischer Materialien wie Verspannungen und Verformungen zu prüfen sind wobei eine ferromagnetische Permeabilität durch magnetische Sättigung unterdrückt wird.

Ein Verfahren ist aus der US 4 855 676 A mit einer über eine Kabelverbindung geführten Rohrsonde bekannt, womit Defekte oder Risse in einem Rohr aus ferromagnetischem Material durch Wirbelstrom induktion detektiert werden. Dabei ergeben sich unterschiedliche Signalbilder infolge der Permeabilität des Materials, die durch magnetische Sättigung mit Permanentmagneten und wahlweise auch Elektromagneten eliminiert wird. Die mechanisch-technologischen Eigenschaften des Materials werden dabei nicht aufgeschlüsselt.

Es ist Aufgabe der vorliegenden Erfindung, den Anwendungsbereich eines bislang in einer Rohrleitung verwendeten Messverfahrens zu vergrößern.

Die Aufgabe wird gelöst durch ein Verfahren gemäß Anspruch 1. Vorteilhafte Ausgestaltungen der Erfindung sind den auf diesen Anspruch rückbezogenen Unteransprüchen sowie der nachfolgenden Beschreibung zu entnehmen.

Erfindungsgemäß wird ein Pipeline-Inspektionsverfahren zur Bestimmung des Materials der Pipeline bereitgestellt, bei dem der Wirbelstrom in einem magnetisch zumindest im Wesentlichen gesättigten Metall erzeugt und der Wirbelstrom von einem Wirbelstromsensor der Sensorvorrichtung gemessen wird, wobei ein Magnetfeldstärkesensor das Magnetfeld des Metalls in Form von ferromagnetischem Stahl zumindest oberflächennah misst, und wobei mittels einer Auswertevorrichtung aus den Daten des Wirbelstromsensors anhand von Referenzdaten einer Referenzdatenbasis umfassend die Härte, die Streckgrenze oder die Zugfestigkeit sowie die elektrische Leitfähigkeit oder den elektrischen Widerstand von ferromagnetischen Stählen die elektrische Leitfähigkeit oder der spezifische elektrische Widerstand des Metalls ermittelt sowie aus der Leitfähigkeit oder dem Widerstand die Kenngröße des Metalls abgeleitet wird.

Das Messprinzip basiert somit zunächst auf der Messung der elektrischen Leitfähigkeit bzw. des spezifisch elektrischen Widerstands des Materials mittels Wirbelstrom. Ein hoher Korrelationskoeffizient von 0,99 zeigt, dass man die elektrische Leitfähigkeit bzw. den spezifischen elektrischen Widerstand von ferromagnetischen Metallen mittels Wirbelstrommessung bestimmen kann. Aufgrund des zumindest im Wesentlichen gesättigten Metalls kann der Einfluss der Hysteresekurve vernachlässigt werden. Der Einfluss von Störquellen wird minimiert. Anschließend wird die Bestimmung der mechanisch-technologischen Kenngröße, insbesondere der Zugfestigkeit, der Streckgrenze oder der Härte des Metalls auf Basis einer starken, aufgefundenen Korrelation zwischen diesen mechanisch-technologischen Eigenschaften und der elektrischen Leitfähigkeit bzw. des spezifischen elektrischen Widerstands des Metalls vorgenommen. Die Genauigkeit des Messprinzips wird durch eine hohe Korrelation von 0,99 zwischen dem Wirbelstromsignal und der Zugfestigkeit verdeutlicht.

Um den Einfluss der relativen Permeabilität auszuschließen ist wie vorbeschrieben die Messung im zumindest im Wesentlichen gesättigten Metall vorzunehmen. Während man typischerweise bei Flussdichten von 2 T eine magnetische Sättigung des Metalls annimmt, hat sich ergeben, dass für die Zwecke der vorliegenden Auswertung bereits eine Flussdichte von zumindest 1,5 T ausreichend ist, dies insbesondere für feingranularen Baustahl, wie er im Pipelinebereich oftmals verwendet wird. Insofern ist das Metall dann als im Wesentlichen gesättigt zu bezeichnen, wenn es zumindest zu 60% gesättigt ist. Dies gilt für den Bereich, in dem sich der Wirbelstrom ausbildet. Der Wirbelstrom, der für vorliegende Anwendungsfälle Eindringtiefen insbesondere bis zu 3 mm aufweisen kann, wird erfindungsgemäß dergestalt ausgebildet, dass bei zu verwendenden Frequenzen der Sensorvorrichtung von insbesondere 100 kHz bis 500 kHz, bevorzugt 200 kHz bis 400 kHz, die Eindringtiefe kleiner als 1 mm beträgt. Hierdurch werden Wanddickeneinflüsse der in der Regel zwischen 4 mm und 40 mm dicken Wände vermieden.

Die Sensorvorrichtung umfassend eine Sendespule weist in der Regel zu dieser Spule zugehörige elektronische Mittel auf und kann auch als Spulensystem beschrieben werden. Außerdem kann eine Sensorvorrichtung auch mehr als eine Spule aufweisen, wobei eine Sende- und Empfangsspule getrennt, ggf. jedoch auch durch dieselbe Spule ausgebildet sein kann.

Bei einer magnetischen Flussdichte im ferromagnetischen Metall von 1,5 T werden die Remanenz-Effekte bereits ausreichend unterdrückt. Bei einer Magnetisierung von rund 5 kA/m beträgt die Flussdichte bereits ca. 80% der maximalen Flussdichte, bei 10 kA/m werden knapp 90% erreicht. Hierbei wird die Sättigung als der Punkt definiert, ab dem eine Erhöhung der Feldstärke zu keiner weiteren Verminderung des Rauschens mehr führt. Dies gilt insbesondere wieder für feingranulare Baustähle.

Der erzeugte Wirbelstrom ist abhängig von der Anregungsfrequenz ω und den Materialkonstanten des Stahls, nämlich der elektrischen Leitfähigkeit s und der magnetischen relativen Permeabilität µ = µ₀·µᵣₑₗ. Die elektrische Leitfähigkeit s des Metalls ist zusätzlich abhängig von der Temperatur. Vereinfachend kann das Spulensignal S als Funktion f aus dem Produkt der elektrischen Leitfähigkeit, der relativen Permeabilität und des Lift-Offs (LO), da dieser in das angeregte magnetische Feld H (LO) eingeht, dargestellt werden.

Das Wirbelstromsignal hängt u.a. von den drei Parametern s,·µᵣₑₗ und LO ab. Variationen dieser Parameter führen zur Änderung des Spulen-Messsignals in der 2D-Impedanzebene. Da es drei Parameter sind, ist es klar, dass diese in der 2D-Impedanzebene linear abhängig sein müssen, d.h. die drei Vektoren der Variationen können nicht senkrecht aufeinander stehen und Veränderungen eines Parametervektors können diesem teilweise nicht eindeutig zugeordnet werden. Insofern ist es vorteilhaft, den Lift-Off LO entweder konstant zu halten bzw. zu bestimmen, um somit Variationen eines sich ändernden Magnetfeldes aufgrund eines Lift-offs des Wirbelstromsensors bzw. der Sensorvorrichtung korrigieren zu können.

Während eine Vielzahl von ferromagnetischen Materialien bei einer Flussdichte von rund 2 T gesättigt sind, reicht für die Zwecke der vorliegenden Messung eine Flussdichte von 1,5 T. Erfindungsgemäß wird durch die Messung in einem im Wesentlichen gesättigten Magnetfeld der Einfluss der Hysteresekurve bzw. des µrel ausgeschaltet. Die Temperatur und der Lift-Off können als Störgrößen betrachtet werden. Zur Verbesserung der Messung ist es daher vorteilhaft, die Temperatur und/oder den Lift-Off zu bestimmen und/oder konstant zu halten. Insbesondere in einer kilometerlangen Pipeline wird die Temperatur sinnvollerweise zu bestimmen sein.

Die Sensorvorrichtung umfasst eine vorzugsweise wechselstrombetriebene Sendespule, die gleichzeitig auch als Empfangsspule und somit als Wirbelstromsensor ausgebildet sein kann. Je nach Setup kann die Sensorvorrichtung auch zwei in einer Brückenschaltung gekoppelte Spulen aufweisen, die dann ebenfalls den Wirbelstromsensor ausbilden. Darüber hinaus weist die Sensorvorrichtung Mittel zum Ansteuern und Mittel zum Messen der durch die Wirbelströme induzierten Ströme und/oder Spannungen bzw. deren Phasen auf.

Es versteht sich, dass die von dem Wirbelstromsensor aufgenommenen Daten nicht unmittelbar die mechanisch-technologische Kenngröße darstellen, sondern mittels der Auswertevorrichtung diese Kenngröße abgeleitet wird. Die Auswertevorrichtung kann je nach verwendeten Meßsystem unmittelbar mit der Sensorvorrichtung verbunden sein, bei Verwendung eines Inspektionsgeräts für Pipelines (Inspektionsmolch) kann die Auswertevorrichtung jedoch auch getrennt von dem Inspektionsgerät und nur zum Zwecke der Datenübertragung mit dem Inspektionsgerät verbunden sein. Es kann auch vorteilhaft sein, eine erste einfache Auswertung der Daten, z.B. eine einfache Filterung, bereits auf dem Inspektionsgerät vorzunehmen und die weitere Auswertung dann nach dem Herunterladen der Daten von dem Inspektionsgerät in der weiteren Auswertevorrichtung vorzunehmen.

Typischerweise umfasst eine Auswertevorrichtung Mittel zum Kommunizieren mit dem Inspektionsgerät, Mittel zum Zwischenspeichern und Verarbeiten der Wirbelstromsensordaten sowie weiterhin benötigter Daten, insbesondere von Ortsdaten, die aus weiteren Sensoren des Inspektionsgerätes gewonnen werden können, und Speicher-, Anzeige- und/oder Ausgabemittel für die Ergebnisse der Datenauswertung. Ebenfalls weist eine Auswerteeinheit oftmals ein entsprechendes Programm zum Auswerten der Daten auf, da die Analyse der Daten in der Regel rechnergestützt erfolgt. Beispielhaft kann ein Inspektionssystem einen Inspektionsmolch und einen mit diesem verbindbaren Notebook umfassen, auf dem die Referenzdaten abgespeichert sind und auf dem die von dem Inspektionsmolch heruntergeladenen Wirbelstromsensor- und zugehörigen Ortsdaten analysiert werden.

Die Messung des Wirbelstroms erfolgt insbesondere oberflächennah, d.h., vorzugsweise innerhalb eines Abstands von < 10 mm einer Spule der Sensorvorrichtung von der Oberfläche des zu messenden Metalls. Bei der Messung handelt es sich um eine berührungslose, nicht destruktive Bestimmung der Wirbelströme, d.h., die Messung wird nicht beeinträchtigt, wenn zwischen Sensoren und Oberfläche des Metalls ein Abstand besteht. Beispielsweise kann der Wirbelstromsensor mittels einer dünnen Keramikschicht von dem Metall getrennt sein.

Während üblicherweise im Stand der Technik die Sensorvorrichtung fest positioniert ist, ist es bei dem erfindungsgemäßen Verfahren vorgesehen, dass sich die Sensorvorrichtung vorzugsweise als Teil eines Inspektionsmolches innerhalb einer Pipeline und entlang derer innenseitigen Oberfläche bewegt. Hierdurch können insbesondere Pipelines, bei denen eine Vielzahl von Rohren unterschiedlicher Materialien eingesetzt wurde, durchgemessen und hinsichtlich ihrer Integrität besser abgeschätzt werden.

Entsprechend ist es von Vorteil, wenn mehrere der Sensorvorrichtungen in Umfangsrichtung nebeneinander und bezüglich einer Längsmittelachse in radialer Richtung beweglich angeordnet sind, dergestalt, dass die Sensorvorrichtungen an der Innenseite einer metallischen Pipeline angeordnet werden und in Umfangsrichtung die Kenngröße derselben messen bzw. die zugehörigen Wirbelstrom-Daten aufnehmen. Insbesondere wird über eine Vielzahl von Sensorvorrichtungen die Kenngröße in Umfangsrichtung gemessen um redundant zu erkennen, ob aneinander angrenzende Pipelinerohrabschnitte unterschiedliche Stahlsorten aufweisen.

In Umfangsrichtung nebeneinander sind die Sensorvorrichtungen dann, wenn sie bezüglich einer Projektion auf einer Ebene quer zur Längsmittelachse des Molches, die dann der Längsmittelachse einer gerade verlaufenden Pipeline entsprechen würde, nebeneinander angeordnet sind. Eine redundante Messung kann natürlich auch mit bzgl. der Längsmittelachse hintereinander angeordneten Sensorvorrichtungen erzielt werden.

Vorzugsweise handelt es sich bei der Kenngröße um die Härte, die Streckgrenze oder die Zugfestigkeit des Materials. In den Referenzdaten sind daher die entsprechenden Größen für eine Vielzahl von Metallen mit deren elektrischen Leitfähigkeiten bzw. spezifischen elektrischen Widerständen aufgelistet. Insbesondere umfasst die Referenzdatenbasis ferromagnetische Stähle, und zwar vorzugsweise feingranulare ferromagnetische Stähle, die in Pipelines verwendet werden.

Während es ohne Weiteres möglich ist, die Sensorvorrichtung umfassend eine Sendespule und einen Wirbelstromsensor auf einer einzigen Spule aufzubauen, d.h. das Spulensystem der Sensorvorrichtung auf eine einzige Spule zu beschränken, ist es zwecks Erhöhung der Messgenauigkeit besonders vorteilhaft, wenn das Magnetfeld zur Erzeugung des Wirbelstroms zumindest von einer ersten Spule der Sensorvorrichtung erzeugt wird, die Sensorvorrichtung noch eine weitere Spule umfasst und die Wirbelstrom anhand einer Spannungs- und Phasendifferenz in einer Brückenschaltung umfassend die beiden Spulen gemessen wird.

Vorzugsweise wird zur Minimierung des Einflusses der relativen Permeabilität das Metall durch die Magnetisiervorrichtung magnetisch gesättigt, d.h., die Flussdichte in dem Metall beträgt rund 2 T.

Durch die Magnetisiervorrichtung wird in dem vorzugsweise aus feingranularem Stahl bestehenden Metall insbesondere ein Magnetfeld erzeugt, dessen Stärke mehr als 4 kA/m, bevorzugt mehr als 5 kA/m und noch bevorzugter mehr als 6 kA/m beträgt. Auch in diesem Fall ist man bezüglich einer Hysteresekurve des zu betrachtenden Metalls in einem Bereich, in dem der Einfluss von relativen Permeabilitäten auf die zu messenden Größen und in den vorbeschriebenen Gleichungen vernachlässigbar wird. Entsprechend wird auch der Abstand des Wirbelstromsensors von der Oberfläche des Metalls entweder aufgenommen und/oder vorgegeben, um die Abhängigkeit des Wirbelstromsignals vom Lift-off, d.h. dem Abstand des Wirbelstromsensors vom Metall, auszuschalten. Zur Messung der Temperatur kann ein Temperatursensor vorgesehen werden, dieser ist insbesondere in oder an einem Gehäuse des Zentralkörpers angeordnet. Das Wirbelstromsignal kann dann hinsichtlich der Temperatur korrigiert werden, es wird unabhängig von der Temperatur. Der Temperatursensor kann auch in unmittelbarer Nähe der Sensorvorrichtung angeordnet sein, insbesondere auf einem zugehörigen Carrier, um auch die Sensorvorrichtung hinsichtlich der dort herrschenden Temperatur kalibrieren zu können.

Vorzugsweise erfolgt eine Kalibrierung in Abhängigkeit von der Umgebungstemperatur. D.h, für die Referenzdaten wird für verschiedene Systeme Wirbelstromsensor-Metall die Wirbelstromamplitude in einem Temperaturbereich von beispielsweise 10 bis 70°C aufgenommen. Hierbei wird dann auch die Temperaturdrift des Sensors mit berücksichtigt. Für die Messung der elektrischen Leitfähigkeit wird die Temperatur dann mit einem eigenständigen Temperatursensor gemessen und das Wirbelstromsignal entsprechend der Temperaturkurve verschoben. Bezüglich der Abhängigkeit des Wirbelstrom-Signals im Temperaturbereich von beispielsweise 10 bis 70°C ergibt sich eine lineare Abhängigkeit zwischen dem Signal des Wirbelstromsensors und der Temperaturänderung. Durch die Korrektur des Wirbelstromsignals bezüglich der Temperatur wird die elektrische Leitfähigkeit oder der spezifische elektrische Widerstand temperaturunabhängig bestimmt.

Insbesondere wird zur Minimierung des Einflusses des Lift-Offs auf die Wirbelstromamplitude der Wirbelstromsensor in einem definierten Abstand federnd zur Wand geführt, so dass es möglichst wenig Variationen im Lift-Off gibt.

Zur Kompensation von Variationen im Signal aufgrund von Wandstärkeänderungen, die sich in Änderungen der Magnetisierung auswirken, ist zumindest ein Magnetfeldstärkesensor vorhanden, der oberflächennah das im Metall vorhandene Magnetfeld misst. Beispielsweise handelt es sich hierbei um einen oder mehrere Hall-Sensoren. Oberflächennah bedeutet vorliegend insbesondere < 10 mm Abstand zur Oberfläche.

Außerdem wird ein Inspektionsmolch für Pipelinerohre offenbart. Der weist mit wenigstens einer als Magnetjoch ausgebildeten Magnetisiervorrichtung und einer eine Sendespule aufweisende Sensorvorrichtung umfassend einen Wirbelstromsensor zur Detektion einer mechanisch-technologischen Kenngröße des Pipelinerohrs, insbesondere nach einem Verfahren der Ansprüche 1 bis 8, einen zwischen den Polen der Magnetisiervorrichtung angeordneten Wirbelstromsensor sowie des Weiteren einen Magnetfeldstärkesensor auf. Letzterer kann vorteilhafterweise zwischen den Polen desselben Magnetjochs oder eines benachbarten Magnetjochs angeordnet sein. Die Stärke der Magneten des Magnetjochs ist hierbei ausreichend groß, um die zu untersuchende Wand des Pipelinerohr zumindest in dem Bereich, in dem Wirbelstrom erzeugt werden soll, so stark zu magnetisieren, dass das Metall zumindest im Wesentlichen gesättigt ist. Die zugehörigen Flussdichten liegen hierbei im Bereich > 1,2 T, vorzugsweise > 1,5 T. Entsprechend liegen die Feldstärken im Metall im Bereich von vorzugsweise mehr als 4 kA/m, noch bevorzugter mehr als 5 kA/m. Der Inspektionsmolch ist mit einer in Richtung quer zu einer Längsmittelachse beweglichen Magnetisiervorrichtung versehen. Die Magnetpole der Magnetisiervorrichtung können so direkt an der Pipelinewand anliegen und diese magnetisieren.

Durch dieses Setup ist es möglich, unter Ausschaltung der Einflüsse einer relativen Permeabilität des Materials des Pipelinerohres und insbesondere auch bei genauer Kenntnis der vorherrschenden Temperaturen die mechanisch-technologische Kenngröße aus den Daten des Wirbelstroms abzuleiten. Die Ableitung erfolgt hierbei in der Regel nach dem Auslesen der Daten des Inspektionsmolches bzw. Übertragen der Daten des Inspektionsmolches in eine zugehörige Auswertevorrichtung. Diese umfasst in der Regel EDV- und Anzeige- bzw. Schreib- und Speichermittel, beispielsweise einen Laptop.

Die Magnetisiervorrichtung umfasst vorzugsweise zumindest einen Permanentmagneten und der Magnetfeldstärkesensor ist zwischen den Polen derselben oder einer weiteren, benachbarten Magnetisiervorrichtung angeordnet. Durch die Verwendung von Permanentmagneten ist auch für längere Inspektionsläufe eine ausreichend große Magnetisierung gewährleistet, ohne dass für Elektromagneten Energie mit auf den Molch transportiert werden muss. Die Messung der Magnetfeldstärke zwischen den Polen ist genauer, da nach Durchlauf der Magnetisiervorrichtung des Inspektionsmolches die Magnetfeldstärke der Wand der Pipeline in der Regel stark abnimmt.

Die Sensorvorrichtung ist vorzugsweise auf einem Sensorträger angeordnet, der in radialer Richtung zu einer Längsmittelachse des Inspektionsmolchs kraftbeaufschlagt beweglich ist. Insbesondere handelt es sich hierbei um ein in radialer Richtung beweglich gelagertes Magnetjoch, auf dem der Sensorträger oder die Sensorvorrichtung oder zumindest der Wirbelstromsensor zusätzlich separat kraftbeaufschlagt über beispielsweise ein Kraftspeicherelement in Form einer Feder in radialer Richtung nach außen und in eine Anlage an das Rohr gedrückt werden kann. So wird das Abheben der Sensorvorrichtung von der Pipelinewand aufgrund des Abhebens der Magnetpole des Magnetjochs aufgrund z.B. von Schweißnähten verhindert. Der Sensorträgers bzw. der Wirbelstromsensor bleibt direkt an der Rohrwand. Zum Schutz des Sensorträgers kann dieser, die Sensorvorrichtung oder zumindest der Wirbelstromsensor mit einer Keramikschicht versehen sein, die bei ausreichend hoher Abrasionen erneuert werden kann.

Das Heranführen des Sensorträgers an die Pipelinewand einerseits durch die Magnetjoche, die federbelastet oder nicht bereits aufgrund der magnetischen Anziehungskräfte zur Pipelinewand gezogen werden, sowie die separate kraftbeaufschlagte Führung bzw. Lagerung des Wirbelstromsensors gegenüber dem Magnetjoch oder dem Sensorträger führen zu einer optimalen Führung des Wirbelstromsensors auf der Oberfläche des Rohres.

Vorzugsweise ist der Inspektionsmolch mit einer Vielzahl von in Umfangsrichtung nebeneinander angeordneten Sensorvorrichtungen versehen, die zwischen den Polen zugehöriger Magnetjoche angeordnet sein können.

Vorzugsweise weist die Sensorvorrichtung jeweils drei zwei Spulen umfassende Wirbelstromsensoren auf, wobei jeder Wirbelstromsensor auf eine andere Frequenz ausgelegt bzw. mit einer anderen Frequenz betreibbar ist. Dies dient der Erzeugung redundanter Ergebnisse.

Weitere Vorteile und Einzelheiten der Erfindung sind der nachfolgenden Figurenbeschreibung zu entnehmen. Schematisch dargestellt zeigt:
Fig. 1 einen Inspektionsmolch,
Fig. 2 eine Detailansicht des Gegenstands nach Fig. 1,
Fig. 3 ein Schema einer Sensorvorrichtung,
Fig. 4 ein Schaltplan für einen Gegenstand gemäß Fig. 3,
Fig. 5 ein Flussdiagramm für die Auswertung einer Messung mit einem Gegenstand gemäß Fig. 3,
Fig. 6 eine Veranschaulichung der 2D-Impedanzebene,
Fig. 7 eine Hysteresekurve für ein ferromagnetisches Metall,

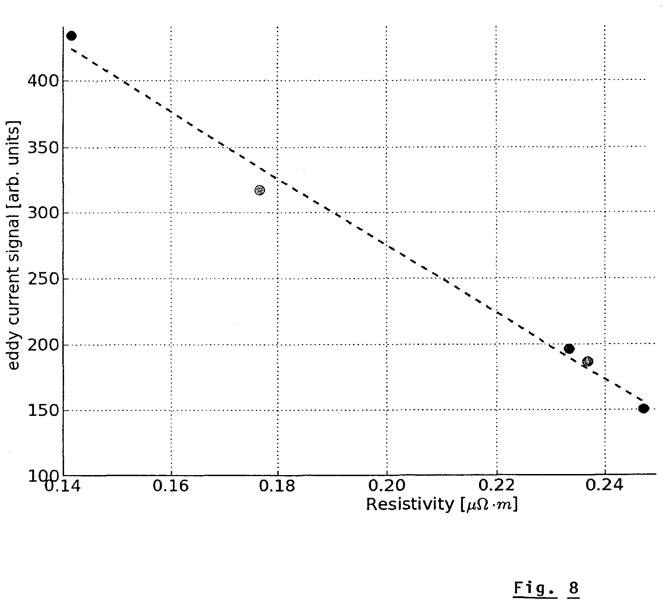

Fig. 8 bis 11 Abbildungen von Messergebnissen und ermittelten Zusammenhängen.

Einzelne technische Merkmale der nachbeschriebenen Ausführungsbeispiele können auch in Kombination mit vorbeschriebenen Ausführungsbeispielen sowie den Merkmalen der unabhängigen Ansprüche und etwaiger weiterer Ansprüche zu erfindungsgemäßen Gegenständen kombiniert werden.

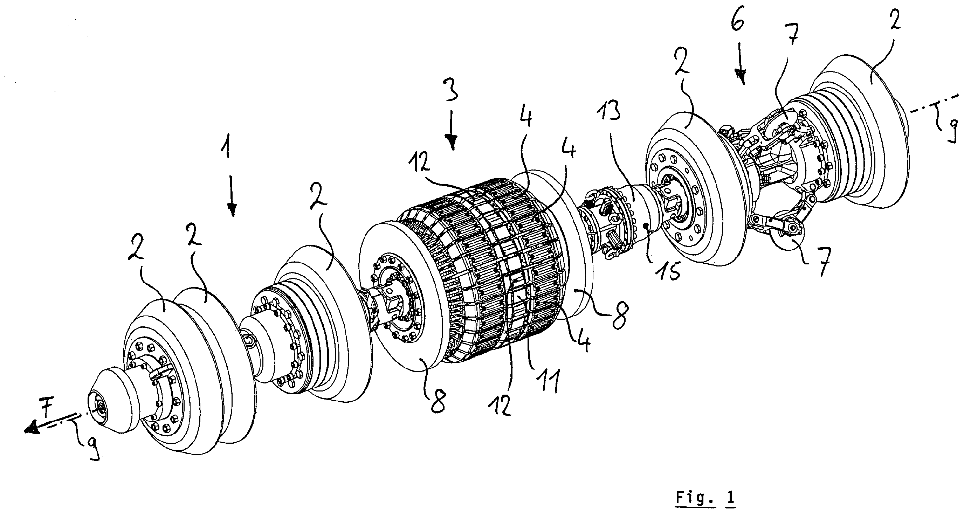

Ein Inspektionsmolch ist für Pipelinerohre gemäß Fig. 1 beispielhaft aus drei Modulen aufgebaut. Ein erstes Modul 1 mit einer Reihe von Cups 2 ist als Zugeinheit in Fahrtrichtung F gelenkig an eine Messeinheit 3 gekoppelt. Diese Messeinheit 3 weist eine Vielzahl von in Umfangsrichtung nebeneinander angeordneten und als Magnetjoch 4 ausgebildeten Magnetisiervorrichtungen auf. Am hinteren Ende des Inpektionsmolches ist wiederum ein im Wesentlichen dem Vortrieb gewidmetes Modul 6 vorhanden, welches zur Bestimmung der in der Pipeline zurückgelegten Wegstrecke diese erfassende Laufrollen 7 aufweist. Ebenfalls weist das Modul 6 Cups 2 auf.

Die zentrale Messeinheit 3 zur Messung der mechanisch-technologischen Größen des Pipelinerohr-Materials weist einen Aufbau mit zwei vorzugsweise aus Polyurethan gefertigten Disks 8 auf. Diese weisen keine Vorzugsrichtung auf, so dass das Modul 3 sowohl in Richtung F als auch in die entgegengesetzte Richtung verwendbar wäre. Um eine Längsmittelachse 9 des Inspektionsmolchs in Umfangsrichtung herum ist eine Vielzahl von Magnetjochen 4 mit zugehörigen Messvorrichtungen angeordnet. Einerseits handelt es sich hierbei um Sensorvorrichtungen 11 zur Wirbelstrommessung. Andererseits sind auf zu einer Sensorvorrichtung 11 benachbarten Jochen 4 Magnetfeldstärkesensoren 12 angeordnet. Die Magnetjoche 4 können hierbei quer zur Längsmittelachse 9 beweglich angeordnet sein, so dass sie in radialer Richtung Änderungen des Rohrinnendurchmessers ausgleichen können. Darüber hinaus können die Sensorträger, die die Sensorvorrichtungen 11 bzw. die Magnetfeldstärkesensoren 12 tragen ebenfalls zusätzlich radial beweglich und insbesondere kraftbeaufschlagt auf dem jeweiligen Magnetjoch angeordnet sein, um eine optimale Position an der Pipelineinnenwand einnehmen zu können.

In einem hohlen Gehäuseteil 13 der Messeinheit 3 sind Mittel zur Aufnahme und Speicherung der von den Sensoren dieses zentralen Moduls aufgenommenen Daten sowie zur Energieversorgung vorhanden. An dem Gehäuse 13 kann weiterhin ein Temperatursensor 15 angeordnet sein, um das Wirbelstromsignal hinsichtlich der Temperatur zu korrigieren oder korrigieren zu können.

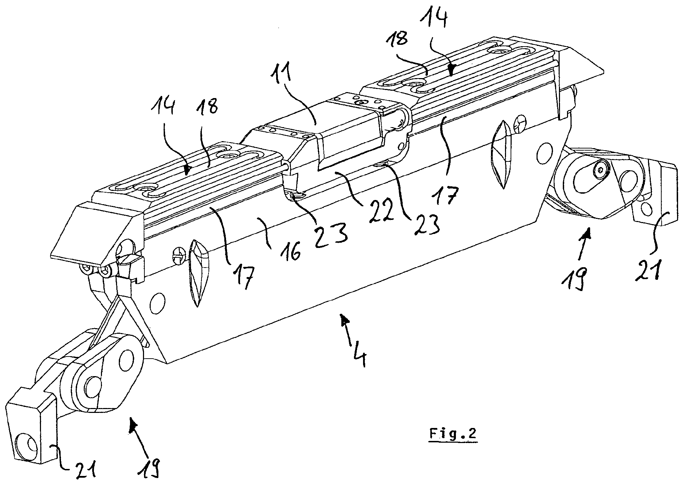

Jedes Magnetjoch 4 weist gemäß Fig. 2 zwei Magnetpole 14 auf, die über eine Eisenplatte 16 miteinander verbunden sind. An diese sind Magnete in Form von Permanentmagneten 17 befestigt, die wiederum über Bürsten o.dgl. Anlagemittel 18 an der Innenwand einer Pipeline anliegen können. Die Anlagemittel 18 bilden die Pole mit aus .Das gesamte Joch 4 ist in radialer Richtung beweglich angeordnet aufgrund von zwei doppelachsigen Gelenken 19. Flansche 21 dienen der Festlegung am weiteren Molchkörper.

Bei dem in der Fig. 2 gezeigten Magnetjoch 4 ist zwischen den beiden Polen 14 eine Sensorvorrichtung 11 angeordnet. Ein zugehöriger Sensorträger 22 ist über insgesamt vier in den Ecken des Sensorträgers 22 angeordnete und als Federn ausgebildete Kraftspeicherelemente 23 ebenfalls in radialer Richtung bezogen auf die Längsmittelachse 9 beweglich angeordnet. Aufgrund der Federn 23 wird der Sensorträger 22 mit der Sensorvorrichtung 11 dicht an die Pipelinewand gedrückt. Hierüber können Unebenheiten, über die die Magnetpole 14 hinweggleiten zusätzlich ausgeglichen werden und es kommt nicht zu einem Lift-Off des Sensorträgers, der in den Daten zu Variationen führen würde.

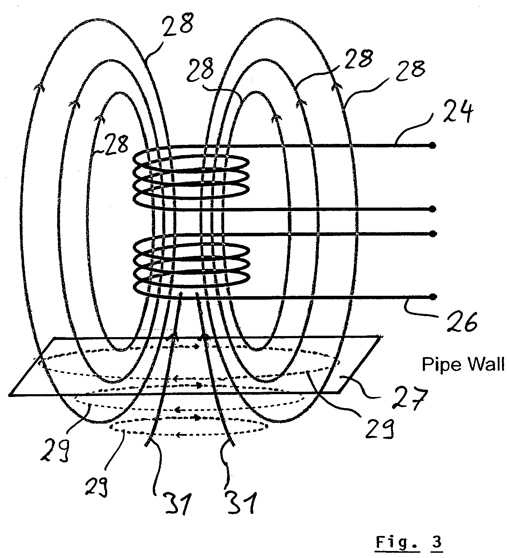

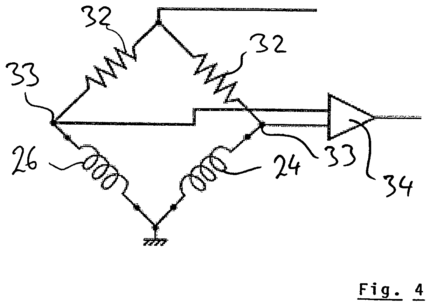

Eine schematische Darstellung der Wirbelstromerzeugung ist in der Fig. 3 gezeigt. Ein Wirbelstromsensor ist hierbei mit zwei Spulen 24 und 26 versehen, die dicht an die innenseitige Oberfläche 27 der Pipelinewand herangeführt werden und von denen zumindest die Spule 24 als Sendespule ausgebildet ist. Bezüglich der Pipelinewand 27 sind die Spulen 24, 26 vorzugsweise übereinander bzw. untereinander, d.h. in einer Richtung senkrecht zur Oberfläche hintereinander angeordnet. Durch die Spulen 24, 25 wird mittels eines Wechselstroms ein primäres Magnetfeld, dargestellt durch Feldlinien 28 erzeugt. Aufgrund dieses zeitlich variierenden Magnetfeldes werden in Verbindung mit dem durch die Magnetisiervorrichtung erzeugten Magnetfeld in der Pipelinewand Wirbelströme erzeugt, die vorliegend mit gestrichelten Linien 29 dargestellt sind. Diese wiederum erzeugen ein sekundäres Magnetfeld, gekennzeichnet durch Feldlinien 31. Das sekundäre Magnetfeld führt zu einer Induktion in den Spulen 24 und 26, was über eine in der Fig. 4 gezeigte Schaltung gemessen werden kann. Die Spulen 24 und 26 sind mit Widerständen 32 zu einer Brückenschaltung verbunden, wobei zwischen den Brückenpunkten 33 eine Spannung abgegriffen werden kann, die über eine Verstärker 34 verstärkt werden kann und einer phasensensitiven Auswertung zugeführt wird.

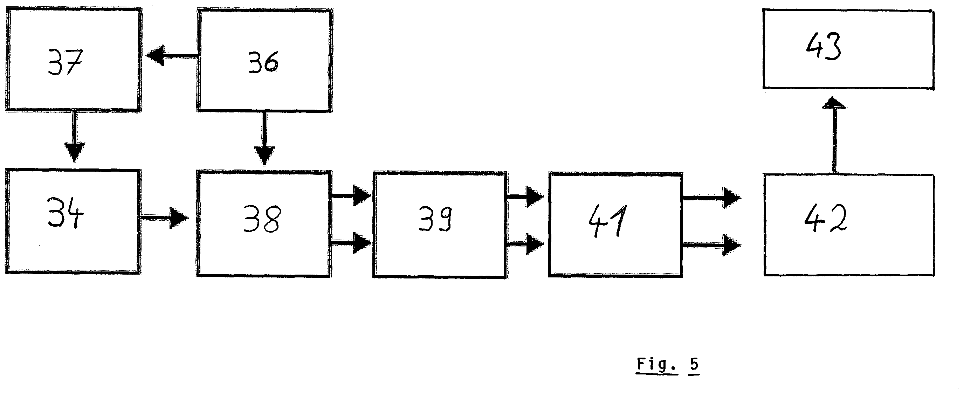

Die Auswertung kann vorzugsweise gemäß dem Flussdiagramm nach Fig. 5 erfolgen, wonach ein Frequenzgenerator 36 die Brückenschaltung 37 antreibt. Die dort abgegriffene Spannung wird über einen Verstärker 34 einem phasensensitiven Detektor 38 zugeführt. Das dort ausgewertete Signal kann phasenrotiert (Auswertemodul 39) oder unmittelbar verstärkt über einen Verstärker 41 weiter verarbeitet werden. Anschließend kann das Signal in einem Speichermittel 42 gespeichert, ggf. ausgegeben und in eine Auswerteeinheit 43 hinsichtlich etwaiger Änderungen ausgewertet werden.

Die wechselstrombetriebenen Spulen 24, 26 sind charakterisiert durch zwei elektrische Impedanz-Größen, die induktive Reaktanz X = 2 p f L = ω L (f: Frequenz der Anregung, L: Induktivität) und den ohmschen Widerstand R, aus denen sich die Impedanz Z = V (R2+X2) ergibt. Zur Darstellung in einer 2D-Impedanzebene werden die Reaktanz auf der Ordinate und der ohmschen Widerstand auf der Abzisse jeweils normiert aufgetragen. In Luft misst der Wirbelstromsensor einen bestimmten Punkt in der Impedanzebene, der sich zu einem weiteren Punkt in der Ebene verschiebt, wenn der Sensor sich auf dem Testobjekt befindet. Der Einfluss des Testobjektes kann also beschrieben werden als eine Änderung der Spulencharakteristik. Die Größe und Richtung der Impedanzänderung hängt hierbei wie vorbeschrieben von den Materialeigenschaften, insbesondere der elektrischen Leitfähigkeit und der magnetischen Permeabilität des Testobjekts ab. Darüber hinaus ist noch der Abstand der Spule zum Prüfobjekt relevant. Durch die Überführung der im Wesentlichen in der innenseitigen oberflächennahen Pipelinewand vorherrschenden hohen Sättigung des zu messenden Materials sowie des konstant gehaltenen Abstands der Spule zum Prüfobjekt (Pipelinewand) ergeben sich Änderungen in der Impedanzebene aufgrund von Änderungen der elektrischen Leitfähigkeit, die dann wiederum mit den mechanisch-technologischen Größen, die eigentlich zu messen sind, zusammenhängen.

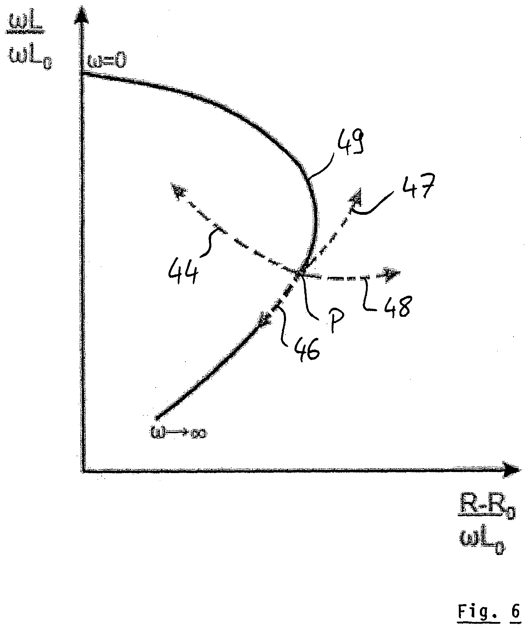

In der Fig. 6 ist gezeigt, wie sich die unterschiedlichen Einflussfaktoren in einer normierten Impedanzebene auswirken. ω L ist hierbei der Imaginärteil der Messung in der Probe, ω L0 der Imaginärteil der Messung in Luft, R der Realteil der Messung an der Probe und R0 = der Realteil der Messung in Luft.

Eine Änderung im Lift-Off ausgehend von einem Punkt P in der Impedanzebene führt zu Verschiebungen in Richtung des Pfeils 44, Änderungen in der Leitfähigkeit s führen zu einer Änderung entlang des Pfeils 46, Permeabilitätsänderungen zu Änderungen in Richtung des Pfeils 47 und Wanddickenänderungen zu Änderungen gemäß dem Pfeil 48. Unter ω ist hierbei die Anregungsfrequenz der Sensorvorrichtung zu verstehen. Wanddickenänderungen werden über Änderungen der Magnetisierung der Wand mittels des HALL-Sensors wahrgenommen bzw. ausgeschlossen, durch die Magnetisierung in nahezu Sättigung wird eine Veränderung des Signals in Richtung 47 ausgeschlossen, ebenfalls wird der Lift-Off in Richtung 44 ausgeschlossen, so dass die Änderungen auf der Kurve sollen sich nur aufgrund von Änderungen der Leitfähigkeit ergeben.

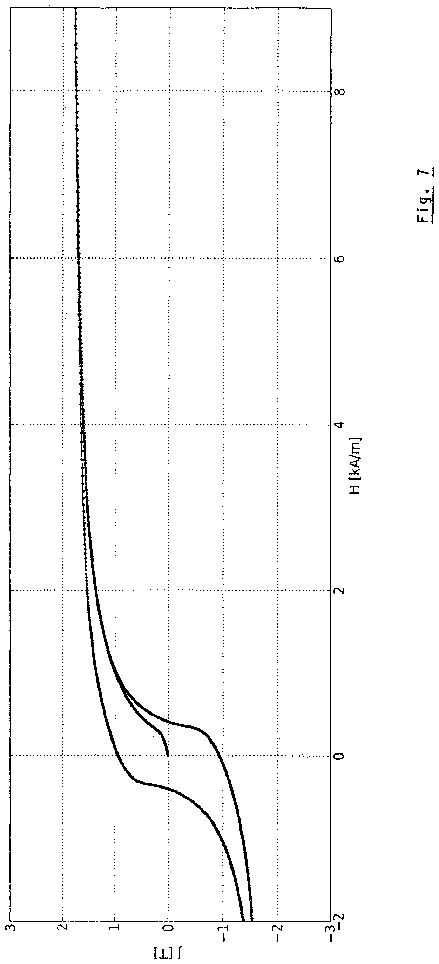

Um den Einfluss der relativen Permeabilität bei der Leitfähigkeitsmessung wie vorbeschrieben zu neutralisieren wird das Wirbelstromsignal vorzugsweise bei einer Sättigungsmagnetisierung von > 5 kA/m aufgenommen. Fig. 7 zeigt beispielhaft eine Hysterekurve für einen oftmals im Pipelinebereich verwendeten Stahl. Es können bereits magnetische Flussdichten ab rund 1,5 T ausreichend sein, um das Messergebnis nicht signifikant zu verfälschen. Bei einigen wenigen Metallen können sogar bereits Flussdichten ab 1,2 T ausreichen. In Sättigungsmagnetisierung sind für insbesondere die im Pipelinebereich zu betrachtenden Stahlsorten die Werte für die relative Permeabilität im Bereich von 220 bis 235, vorzugsweise von 225 bis 233. Entsprechend dem Vorbeschriebenen haben umfangreiche Versuche ergeben, dass die gemessenen Wirbelströme (Y Achse "eddy current signal [arbitrary units]" als lineare Funktion des spezifischen elektrischen Widerstands dargestellt werden kann. Entsprechendes gilt für die Leitfähigkeit, die reziprok zum spezifischen elektrischen Widerstand ist. Es hat sich für die zu betrachtenden Stahlsorten aus dem Pipelinebereich eine hohe Korrelation mit einem Korrelationskoeffizienten von 0,99 ergeben.

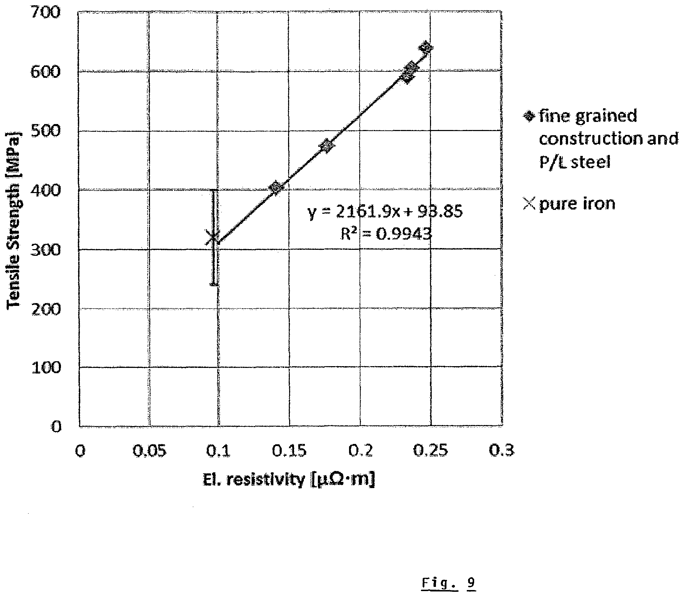

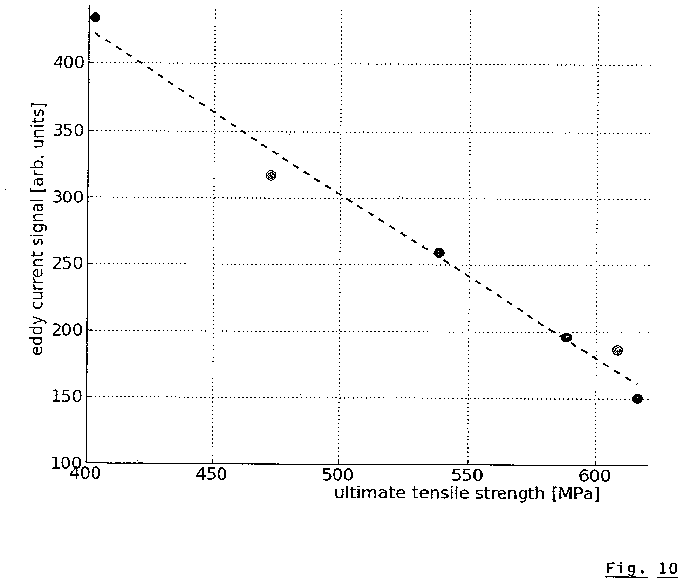

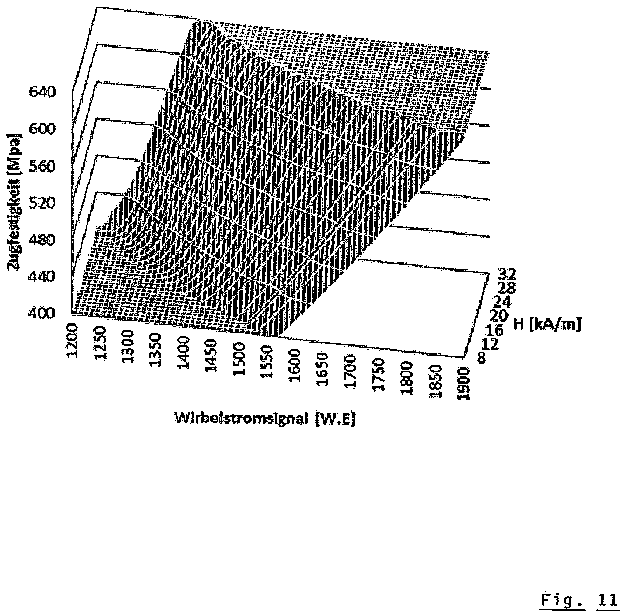

Über weitere Versuche ist die Abhängigkeit von mechanisch-technologischen Kenngrößen, wie beispielsweise der in Fig. 9 gezeigten Zugfestigkeit mit dem spezifischen Widerstand korreliert worden. Die entsprechenden Daten über eine Vielzahl von möglichen und verwendeten Materialien aus dem Pipelinebereich werden in einer Datenbank abgelegt, die dann die Referenzdaten enthält. Entsprechend kann die Zugfestigkeit dann direkt gegen der Wirbelstromsignal gefittet werden (Fig. 10). Aus diesen Daten lässt sich eine Kennfläche zur direkten Bestimmung der Zugfestigkeit aus den beiden gemessenen Werten des Wirbelstromsignals und der magnetischen Feldstärke erzeugen (Fig. 11).

Es hat sich somit gezeigt, dass die Sensorvorrichtung als Teil eines Inspektionsmolchs innerhalb einer Pipeline und entlang deren innenseitigen metallischen Oberfläche bewegt werden kann, dort Wirbelstromsignale aufnimmt, aus diesen die elektrische Leitfähigkeit bzw. der spezifische elektrische Widerstand des Metalls ermittelt wird und aus dieser Größe dann die Kenngröße des Metalls abgeleitet wird. Hierdurch können die Materialien von Pipelines, die vor Jahrzehnten verlegt wurden, bestimmt werden.

Durch die Vielzahl der in Umfangsrichtung um die Längsachse des Inspektionsmolchs herum angeordneten Magnetisier- und Sensorvorrichtungen können Fehler aufgrund von Fehlstellen im Metall zuverlässig ausgeschlossen werden. Insbesondere aneinander grenzende Rohrabschnitte mit unterschiedlichen feingranularen Stählen können somit identifiziert werden und über die im Rohr zurückgelegte, vom Inspektionsgerät ermittelte Strecke gefunden werden.

## Patentansprüche

1. Pipeline-Inspektionsverfahren zur Bestimmung von mechanisch-technologischen Kenngrößen von ferromagnetischen Stählen, bei dem sich eine Sensorvorrichtung (11) als Teil eines Inspektionsmolches innerhalb einer Pipeline und entlang derer innenseitigen Oberfläche (27) bewegt, wobei eine zumindest einen Permanent- oder Elektromagneten (17) aufweisende Magnetisiervorrichtung das zu bestimmende Metall in Form von ferromagnetischem Stahl zur Minimierung des Einflusses der relativen Permeabilität zumindest im Wesentlichen gesättigt magnetisiert und die Sensorvorrichtung (11) umfassend eine Sendespule (24) ein wechselndes Magnetfeld erzeugt, welches mit dem von der Magnetisiervorrichtung im Metall erzeugten Magnetfeld wechselwirkt und einen Wirbelstrom erzeugt, der von einem Wirbelstromsensor der Sensorvorrichtung (11) gemessen wird, wobei ein Magnetfeldstärkesensor (12) das Magnetfeld des Metalls zumindest oberflächennah misst und die Sensorvorrichtung (11) für eine Eindringtiefe des Wirbelstroms kleiner 1mm Frequenzen von 100 kHz bis 500 kHz verwendet, und wobei mittels einer Auswertevorrichtung (43) aus den Daten des Wirbelstromsensors anhand von Referenzdaten einer Referenzdatenbasis umfassend die Härte, die Streckgrenze oder die Zugfestigkeit sowie die elektrische Leitfähigkeit oder den elektrischen Widerstand von ferromagnetischen Stählen die elektrische Leitfähigkeit und/oder der spezifische elektrische Widerstand des Metalls ermittelt sowie aus der Leitfähigkeit oder dem Widerstand als mechanisch-technologische Kenngröße des Metalls die Härte, die Streckgrenze oder die Zugfestigkeit abgeleitet wird.

2. Verfahren nach Anspruch 1, **dadurch gekennzeichnet, dass** mehrere der Sensorvorrichtungen (11) in Umfangsrichtung um eine Längsmittelachse (9) des Inspektionsmolchs herum Daten zur Detektion der Kenngröße der Pipeline-Wand aufnehmen.

3. Verfahren nach einem der vorherigen Ansprüche, **dadurch gekennzeichnet, dass** das Magnetfeld zur Erzeugung des Wirbelstroms zumindest von der Sendespule (24) ersten Spule der Sensorvorrichtung (11) erzeugt wird, die Sensorvorrichtung noch eine weitere Spule (26) umfasst und der Wirbelstrom anhand einer Spannungs- und Phasendifferenz in einer Brückenschaltung (37) umfassend die beiden Spulen (24,26) gemessen wird.

4. Verfahren nach einem der vorherigen Ansprüche, **dadurch gekennzeichnet, dass** durch die Magnetisiervorrichtung in dem Metall ein Magnetfeld erzeugt wird, dessen Stärke mehr als 4 kA/m beträgt.

5. Verfahren nach einem der vorherigen Ansprüche, **dadurch gekennzeichnet, dass** der Abstand des Wirbelstromsensors aufgenommen und/oder vorgegeben wird, um die Abhängigkeit des Wirbelstromsignals vom Lift-Off auszuschalten.

6. Verfahren nach einem der vorherigen Ansprüche, **dadurch gekennzeichnet, dass** die Temperatur von einem Temperatursensor (15) gemessen wird, um die elektrische Leitfähigkeit oder den spezifischen elektrischen Widerstand und/oder das Wirbelstromsignal hinsichtlich der Temperatur zu korrigieren.

7. Verfahren nach einem der vorherigen Ansprüche, **dadurch gekennzeichnet, dass** die Sensorvorrichtung (11) zumindest zwei, vorzugsweise drei, insbesondere auf einem gemeinsamen Sensorträger (22) angeordnete Wirbelstromsensoren aufweist, die auf verschiedenen Frequenzen den Wirbelstrom messen.

8. Verfahren nach einem der vorherigen Ansprüche, **dadurch gekennzeichnet, dass** eine Mehrzahl von Sensorvorrichtungen (11) in Umfangsrichtung nebeneinander und bezüglich einer Längsmittelachse (9) in radialer Richtung beweglich angeordnet sind, dergestalt, dass die Sensorvorrichtungen (11) an der Innenseite einer metallischen Pipeline angeordnet werden und in Umfangsrichtung die Kenngröße derselben messen.

## Claims

1. A pipeline inspection method for determining mechanical-technological characteristic variables of ferromagnetic steels, in which a sensor device (11) moves as part of an inspection pig inside a pipeline and along its interior surface (27), wherein a magnetizing device having at least one permanent magnet or electromagnet (17) magnetizes in an at least essentially saturated manner the metal to be determined in the form of ferromagnetic steel to minimize the influence of the relative permeability and the sensor device (11) comprising a transmitting coil (24) generates an alternating magnetic field, which interacts with the magnetic field generated by the magnetizing device in the metal and generates an eddy current, which is measured by an eddy current sensor of the sensor device (11), wherein a magnetic field strength sensor (12) measures the magnetic field of the metal at least close to the surface and the sensor device (11) uses frequencies of 100 kHz to 500 kHz for penetration depth of the eddy current less than 1 mm, and wherein the electrical conductivity and/or the specific electrical resistance of the metal is ascertained by means of an evaluation unit (43) from the data of the eddy current sensor on the basis of reference data of a reference database comprising the hardness, the yield strength, or the tensile strength and the electrical conductivity or the electrical resistance of ferromagnetic steels and the hardness, the yield strength, or the tensile strength is derived from the conductivity or the resistance as a mechanical-technological characteristic variable of the metal.

2. The method as claimed in claim 1, **characterized in that** multiple of the sensor devices (11) record data for detecting the characteristic variable of the pipeline wall in the circumferential direction around a longitudinal center axis (9) of the inspection pig.

3. The method as claimed in any one of the preceding claims, **characterized in that** the magnetic field for generating the eddy current is generated at least by the transmitting coil (24) as the first coil of the sensor device (11), the sensor device also comprises a further coil (26), and the eddy current is measured on the basis of a voltage and phase difference in a bridge circuit (37) comprising the two coils (24, 26).

4. The method as claimed in any one of the preceding claims, **characterized in that** a magnetic field, the strength of which is more than 4 kA/m, is generated by the magnetizing device in the metal.

5. The method as claimed in any one of the preceding claims, **characterized in that** the distance of the eddy current is recorded and/or predefined to switch off the dependency of the eddy current signal on the liftoff.

6. The method as claimed in any one of the preceding claims, **characterized in that** the temperature is measured by a temperature sensor (15) to correct the electrical conductivity or the specific electrical resistance and/or the eddy current signal with respect to the temperature.

7. The method as claimed in any one of the preceding claims, **characterized in that** the sensor device (11) has at least two, preferably three eddy current sensors, in particular arranged on a shared sensor carrier (22), which measure the eddy current at different frequencies.

8. The method as claimed in any one of the preceding claims, **characterized in that** a plurality of sensor devices (11) is arranged adjacent to one another in the circumferential direction and movably with respect to a longitudinal center axis (9) in the radial direction, in such a way that the sensor devices (11) are arranged on the inside of a metallic pipeline and measure the characteristic variable thereof in the circumferential direction.

## Revendications

1. Procédé d'inspection de pipeline pour la détermination de caractéristiques mécano-technologiques d'aciers ferromagnétiques, selon lequel un dispositif de détection (11) en tant que partie d'un racleur d'inspection se déplace à l'intérieur d'un pipeline et le long de la surface (27) côté intérieur de celui-ci, dans lequel un dispositif de magnétisation présentant au moins un aimant permanent ou électroaimant (17) magnétise au moins sensiblement de manière saturée le métal à déterminer sous forme d'acier ferromagnétique pour la réduction au minimum de l'influence de la perméabilité relative et le dispositif de détection (11) comprenant une bobine émettrice (24) produit un champ magnétique alternatif, lequel coopère avec le champ magnétique produit par le dispositif de magnétisation dans le métal et produit un courant de Foucault, qui est mesuré par un capteur de courant de Foucault du dispositif de détection (11), dans lequel un capteur d'intensité de champ magnétique (12) mesure le champ magnétique du métal au moins à proximité de la surface et le dispositif de détection (11) pour une profondeur de pénétration du courant de Foucault inférieure à 1 mm utilise des fréquences de 100 kHz à 500 kHz, et dans lequel la conductivité électrique et/ou la résistance électrique spécifique du métal est déterminée au moyen d'un dispositif d'évaluation (43) à partir des données du capteur de courant de Foucault sur la base de données de référence d'une base de données de référence comprenant la dureté, la limite d'élasticité apparente ou la résistance à la traction ainsi que la conductivité électrique ou la résistance électrique d'aciers ferromagnétiques ainsi que la dureté, la limite d'élasticité apparente ou la résistance à la traction est déduite de la conductivité ou de la résistance en tant que caractéristique mécano-technologique du métal.

2. Procédé selon la revendication 1, **caractérisé en ce que** plusieurs des dispositifs de détection (11) reçoivent dans la direction périphérique autour d'un axe longitudinal médian (9) du racleur d'inspection des données pour la détection de la caractéristique de la paroi de pipeline.

3. Procédé selon l'une quelconque des revendications précédentes, **caractérisé en ce que** le champ magnétique pour la production du courant de Foucault est produit au moins par la première bobine bobine émettrice (24) du dispositif de détection (11), le dispositif de détection comprend encore une autre bobine (26) et le courant de Foucault est mesuré sur la base d'une différence de tension et de phase dans un montage en pont (37) comprenant les deux bobines (24, 26).

4. Procédé selon l'une quelconque des revendications précédentes, **caractérisé en ce qu'**un champ magnétique dont l'intensité atteint plus de 4 kA/m est produit par le dispositif de magnétisation dans le métal.

5. Procédé selon l'une quelconque des revendications précédentes, **caractérisé en ce que** la distance du capteur de courant de Foucault est enregistrée et/ou prédéfinie, afin de mettre hors circuit la dépendance du signal de courant de Foucault du décollement.

6. Procédé selon l'une quelconque des revendications précédentes, **caractérisé en ce que** la température est mesurée par un capteur de température (15), afin de corriger la conductivité électrique ou la résistance électrique spécifique et/ou le signal de courant de Foucault en ce qui concerne la température.

7. Procédé selon l'une quelconque des revendications précédentes, **caractérisé en ce que** le dispositif de détection (11) présente au moins deux, de préférence trois capteurs de courant de Foucault disposés en particulier sur un support de capteur (22) commun, qui mesurent le courant de Foucault à différentes fréquences.

8. Procédé selon l'une quelconque des revendications précédentes, **caractérisé en ce qu'**une pluralité de dispositifs de détection (11) sont disposés dans la direction périphérique les uns à côté des autres et par rapport à un axe longitudinal médian (9) de manière mobile dans la direction radiale, de telle sorte que les dispositifs de détection (11) sont disposés sur la face intérieure d'un pipeline métallique et mesurent la grandeur caractéristique de celui-ci dans la direction périphérique.
